(19) Europäisches Patentamt
European Patent Office
Office européen des brevets

(11) **EP 3 865 357 B1**

(12) **EUROPÄISCHE PATENTSCHRIFT**

(45) Veröffentlichungstag und Bekanntmachung des Hinweises auf die Patenterteilung:
**03.07.2024   Patentblatt 2024/27**

(21) Anmeldenummer: **21157164.1**

(22) Anmeldetag: **15.02.2021**

(51) Internationale Patentklassifikation (IPC):
***B60T 13/66*** *(2006.01)*        ***B60T 8/17*** *(2006.01)*
***G01L 5/28*** *(2006.01)*

(52) Gemeinsame Patentklassifikation (CPC):
**B60T 13/665; B60T 8/1705; G01L 5/28**

(54) **VORRICHTUNG ZUR BREMSENAUSLEGUNG**

DEVICE FOR BRAKE DESIGN

DISPOSITIF DE CONCEPTION DES FREINS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.02.2020   AT 501142020**

(43) Veröffentlichungstag der Anmeldung:
**18.08.2021   Patentblatt 2021/33**

(73) Patentinhaber: **Siemens Mobility Austria GmbH 1210 Wien (AT)**

(72) Erfinder: **Kleinschuster, Christoph 8010 Graz (AT)**

(74) Vertreter: **Siemens Patent Attorneys Postfach 22 16 34 80506 München (DE)**

(56) Entgegenhaltungen:
**WO-A1-2019/123556      DE-A1-102011 113 024**

EP 3 865 357 B1

**Beschreibung**

Die Erfindung betrifft eine Vorrichtung zur Bremsenauslegung für ein Fahrzeug, insbesondere zur Auslegung von zumindest einer Bremsanordnung eines Schienenfahrzeugs, wobei eine Eingabeeinrichtung, eine Recheneinrichtung sowie eine Ausgabeeinrichtung vorgesehen sind, wobei in der Recheneinrichtung ein Computerprogrammprodukt vorgesehen ist.

Bremsanordnungen von Schienenfahrzeugen weisen häufig verschiedene Bremseinheiten auf, welche als Reibungsbremsen (z.B. als Scheibenbremsen oder Klotzbremsen, Magnetschienenbremsen etc.), aber beispielsweise auch als elektrodynamische Bremsen, Wirbelstrombremsen usw. ausgebildet sein können. Für eine Auslegung derartiger Bremsanordnungen ist eine Berücksichtigung verschiedener technischer Aspekte erforderlich, wobei diese Aspekte einzeln oder in ihrer Gesamtheit analysiert werden können.

Für eine Beurteilung technischer Zustände von Bremsanordnungen kann eine Ermittlung von Temperaturen, Spannungen und Verschleiß notwendig sein, welche sich auf die Reibungsbremsen beziehen, jedoch auch von einer Bremsleistungsverteilung zwischen den Reibungsbremsen und Bremsen anderer Gattungen abhängen können.

Weiterhin ist für die Auslegung eine Berücksichtigung von Bremsausgangsgeschwindigkeiten, Verzögerungen und Bremswegen des Fahrzeugs erforderlich.

Dabei ist es oft notwendig, für eine bestimmte Bremsenkonfiguration (z.B. für eine bestimmte Anzahl an Reibungsbremsen, elektrodynamische Bremsen etc.), diese Bremsausgangsgeschwindigkeiten, Verzögerungen und Bremswege sowie weitere Bedingungen wie Kraftschlussausnutzung, Reibwert zwischen Reibpartnern (z.B. zwischen einer Bremsscheibe und einem Bremsbelag), Fahrzyklen des Fahrzeugs etc. in Abhängigkeit der Temperaturen, der Spannungen und des Verschleißes zu ermitteln.

Eine Ermittlung und Beurteilung technischer Zustände einer Bremsanordnung unter Kombination verschiedener Einflussfaktoren erfordert einen hohen Aufwand.

Aus dem Stand der Technik ist beispielsweise die EP 2 753 514 B1 bekannt, in welcher eine Recheneinheit und ein computerimplementiertes Verfahren zur Entwicklung von Bremsanlagen für Schienenfahrzeuge offenbart ist. Es wird eine Simulation von Bremsungen durchgeführt, bei welcher eine Bremskraftverteilung auf mehrere Bremseinheiten berücksichtigt wird. Die Recheneinheit weist ein Einlese- und ein Ausgabegerät sowie eine Simulationseinrichtung auf. Eine solche Recheneinheit und ein solches Verfahren sind auch in der DE 10 2011 113 024 A1 beschrieben.

In der WO 2018/054736 A1 ist ein Verfahren zur betrieblichen Ermittlung von Temperaturen einer Reibungsbremse eines Fahrzeugs beschrieben, wobei auf Grundlage von Temperaturermittlungen zulässige Fahrgeschwindigkeiten, Verzögerungen oder Fahrprofile etc. vorgegeben werden können und beispielsweise bei unzulässig hohen Temperaturen über eine Regeleinheit eine Bremsung eingeleitet werden kann.

Weiterhin sind in der WO 2016/119929 A1 ein Verfahren und eine Vorrichtung zur Verschleißermittlung bei Bremsbelägen offenbart.

Genannte Ansätze weisen in ihren bekannten Formen den Nachteil auf, dass entweder ein hoher Rechenaufwand für das computerimplementierte Verfahren zu erwarten ist oder nur einzelne Einflussfaktoren auf die Reibungsbremse berücksichtigt werden.

Der Erfindung liegt daher die Aufgabe zugrunde, eine gegenüber dem Stand der Technik weiterentwickelte Vorrichtung anzugeben, welche einen variablen Ermittlungsumfang im Hinblick auf Auslegungskriterien von Bremsanordnungen ermöglicht.

Erfindungsgemäß wird diese Aufgabe gelöst mit einer in dem unabhängigen Anspruch 1 definierten Vorrichtung der eingangs genannten Art, bei der das Computerprogrammprodukt eine Mehrzahl an zum Zweck eines variablen Ermittlungsumfangs im Hinblick auf Auslegungskriterien von Bremsanordnungen miteinander verbindbar und voneinander trennbar ausgebildeten Computerprogrammprodukt-Modulen zur Bremsenauslegung aufweist, wobei eines der Computerprogrammprodukt-Module als Bremsenverschleißermittlungsmodul ausgeführt ist.

Dadurch wird die Bremsenauslegung an eine vorhandene und gegebenenfalls begrenzte Rechnerkapazität anpassbar oder es wird eine Reduktion einer zur Bremsenauslegung erforderlichen Rechenzeit erzielt.

Im Anspruch 12 ist ein Verfahren zur Bremsenauslegung für ein Fahrzeug unter Einsatz einer Vorrichtung wie in der vorliegenden Erfindung definiert.

Beispielsweise können mittels der erfindungsgemäßen Vorrichtung unter Einsatz von Konfigurationsparametern eines Fahrzeugs, einer Bremsanordnung und deren Umgebung (z.B. Zuladung, Art und Anzahl von Bremseinheiten, Bremsblending, Umgebungstemperatur etc.) Bremswege und Bremsentemperaturen ermittelt werden, wobei auf eine ressourcen- und zeitaufwendige Ermittlung der Bremsentemperaturen jedoch bei Bedarf auch verzichtet, d.h. diese abgewählt werden kann. Hierzu wird ein Bremsentemperaturermittlungsmodul von einem Konfigurationsmodul getrennt. Durch diese Maßnahme wird die erforderliche Rechnerkapazität reduziert oder es werden interne Abläufe der Recheneinrichtung beschleunigt. Dadurch wird eine Anwendung der Vorrichtung auch dann ermöglicht, wenn ein sparsamer Einsatz von Rechenressourcen erforderlich ist (beispielsweise auf mobilen Industriecomputern oder Bordrechnern von Fahrzeugen).

Ist auf Basis der Konfigurationsparameter zusätzlich zu einer Bremswegermittlung beispielsweise auch eine Ermittlung von Bremsentemperaturen und Bremsenverschleiß erforderlich, so können das Konfigurationsmodul, das Bremswegermittlungsmodul, das Bremsentemperaturermittlungsmodul sowie ein Bremsenverschleißermittlungsmodul miteinander funktional verbunden werden. Dadurch wird ein bedarfsgerechter Einsatz von Rechenressourcen und somit eine hohe Flexibilität der erfindungsgemäßen Vorrichtung erzielt.

Durch eine Gliederung des Computerprogrammprodukts in einzelne Computerprogrammprodukt-Module kann ein Rechenaufwand zudem verteilt werden (z.B. auf eine Mehrzahl an Prozessorkernen), wodurch selbst bei Vernetzung einer Vielzahl von Computerprogrammprodukt-Modulen eine hohe Recheneffizienz gewährleistet ist.

Durch diese Maßnahme kann ferner die Bremsenauslegung im Hinblick auf erforderliche Standzeiten von Reibpartnern der Bremsanordnung (z.B. von Bremsscheiben und Bremsbelägen oder von Rädern und Bremsklötzen) optimiert werden.

Eine vorteilhafte Ausgestaltung erhält man, wenn die Recheneinrichtung ein Speichermodul aufweist, auf welchem zwei Computerprogrammprodukt-Module gespeichert sind und welches eine Speicherkapazität für mehr als zwei Computerprogrammprodukt-Module aufweist.

Durch diese Maßnahme wird eine einfache Erweiterbarkeit des Computerprogrammprodukts erzielt. Neue Computerprogrammprodukt-Module (z.B. ein Bremsenreibwertmodul) können bei Bedarf hinzugefügt werden, mit bereits vorhandenen Computerprogrammprodukt-Modulen verbunden und auch wieder von diesen getrennt werden.

Hilfreich ist es, wenn eines der Computerprogrammprodukt-Module als Konfigurationsmodul ausgeführt ist.

Mittels des Konfigurationsmoduls können die Konfigurationsparameter des Fahrzeugs, der Bremse und deren Umgebung für die Bremsenauslegung vorgegeben und eingestellt werden.

Darüber hinaus ist es günstig, wenn eines der Computerprogrammprodukt-Module als Bremsenreibwertermittlungsmodul ausgeführt ist.

Dadurch können Reibungskoeffizienten der Reibpartner ermittelt werden, sofern diese vorab im Zuge von Prüfstandversuchen oder Bremsmessfahrten parametrisiert werden, jedenfalls aber ein funktionaler Zusammenhang zwischen dem Reibungskoeffizienten einerseits sowie einer Relativgeschwindigkeit und einer Temperatur zwischen den Reibpartnern während einer Bremsung andererseits vorliegt. Diese ermittelten Reibungskoeffizienten können wiederum in eine Bremswegermittlung eingesetzt werden, wodurch u.a. eine Temperaturabhängigkeit von Bremswegen eingeschätzt werden kann.

Eine vorteilhafte Lösung wird erzielt, wenn die Computerprogrammprodukt-Module mit einem Optimierungsmodul verbindbar sind.

Dadurch ist es möglich, Parameter und Ermittlungsergebnisse verschiedener Computerprogrammprodukt-Module aneinander anzupassen bzw. einen Ausgleich zwischen einzelnen Anforderungen an die Bremsenauslegung zu bewirken.

Beispielsweise kann bei Ermittlung unzulässig hoher Bremsentemperaturen durch das Bremsentemperaturermittlungsmodul das Optimierungsmodul, welches als eigenes Computerprogrammprodukt-Modul ausgebildet sein kann, die in dem Konfigurationsmodul eingestellte Anzahl an Bremseinheiten erhöhen und auf Grundlage dessen einen neuen Ermittlungsdurchlauf in Bezug auf Bremswege, Bremsentemperaturen etc. starten.

Weiterhin ist es hilfreich, wenn die Computerprogrammprodukt-Module über die Eingabeeinrichtung miteinander verbindbar und voneinander trennbar ausgebildet sind.

Hierdurch wird ein manueller Zugriff auf die Computerprogrammprodukt-Module ermöglicht.

In diesem Zusammenhang ist es auch vorteilhaft, wenn die Recheneinrichtung eine grafische Benutzeroberfläche aufweist. Dadurch wird der Zugriff auf die Computerprogrammprodukt-Module übersichtlicher.

Dabei wird eine weitere Vereinfachung erzielt, wenn die Eingabeeinrichtung über die Recheneinrichtung mit der grafischen Benutzeroberfläche verbunden ist.

In diesem Zusammenhang ist es ferner günstig, wenn die Ausgabeeinrichtung über die Recheneinrichtung mit der grafischen Benutzeroberfläche verbunden ist.

Dadurch können Ermittlungsergebnisse zur Bremsenauslegung sowie Konfigurationsparameter etc. beispielsweise einem Benutzer zur Bewertung ausgegeben werden.

Für die Bremsenauslegung ist es vorteilhaft, wenn Konfigurationsparameter über die Eingabeeinrichtung eingelesen werden, mittels der Recheneinrichtung unter Einsatz der Konfigurationsparameter technische Bremszustände ermittelt werden, auf Grundlage entsprechender Ermittlungsergebnisse bezüglich der Bremszustände die Konfigurationsparameter bestätigt oder angepasst werden und die Bremszustände sowie die Konfigurationsparameter über die Ausgabeeinrichtung ausgegeben werden.

Durch diese Maßnahme wird eine automatisierbare Bremsenauslegung mit einer Rückkoppelung erreicht. Ergeben beispielsweise die Ermittlungsergebnisse einen unzulässig langen Bremsweg, so werden aufgrund dieser Rückkoppelung die Konfigurationsparameter angepasst. Dabei kann beispielsweise die Anzahl der Bremseinheiten erhöht oder eine Bremskraft je Bremseinheit vergrößert werden etc.

Eine vorteilhafte Lösung erhält man, wenn Teile der Konfigurationsparameter zumindest einen Fahrzyklus des Fahrzeugs definieren, welcher auf Grundlage der Ermittlungsergebnisse bezüglich der Bremszustände bestätigt oder angepasst wird.

Dadurch können in der Bremsenauslegung auch Fahrzyklusparameter (z.B. Streckenparameter) als veränderliche und somit optimierbare Parameter angesetzt werden. Ergeben beispielsweise die Ermittlungsergebnisse unzulässig hohe Bremsentemperaturen, so können u.a. Aufenthaltsdauern des Fahrzeugs in Bahnhöfen oder Haltestellen erhöht werden, um verfügbare Abkühlzeiträume für die Bremsanordnung zu vergrößern etc. Ein Bremsenkonzept kann dann beispielsweise unter Vorgabe definierter Mindestaufenthaltsdauern des Fahrzeugs in Bahnhöfen oder Haltestellen als zulässig bewertet werden.

Weiterhin ist es günstig, wenn als Bremszustände zumindest Bremsentemperaturen, Bremsenreibungskoeffizienten sowie Bremswege ermittelt werden, wobei die Bremsenreibungskoeffizienten in eine Bremswegermittlung eingesetzt werden.

Durch diese Maßnahme wird eine Genauigkeitssteigerung bei der Bremswegermittlung erzielt.

Nachfolgend wird die Erfindung anhand von Ausführungsbeispielen näher erläutert.

Es zeigen beispielhaft:

Fig. 1:    Eine beispielhafte Ausführungsvariante einer Vorrichtung zur Bremsenauslegung für ein Schienenfahrzeug mit einer Eingabeeinrichtung, einer Recheneinrichtung und einer Ausgabeeinrichtung,

Fig. 2:    Eine schematische Darstellung eines beispielhaften Computerprogrammprodukts, wobei eine Mehrzahl an Computerprogrammprodukt-Modulen auf einem Speichermodul einer Recheneinrichtung einer beispielhaften Ausführungsvariante einer erfindungsgemäßen Vorrichtung zur Bremsenauslegung gespeichert ist,

Fig. 3:    Ein Flussdiagramm zu einer beispielhaften Ausführungsvariante eines erfindungsgemäßen Verfahrens zur Bremsenauslegung, und

Fig. 4:    Eine Ergebnisanzeige zu einer beispielhaften Ausführungsvariante eines erfindungsgemäßen Verfahrens zur Bremsenauslegung mit einem Temperaturdiagramm, einem Blendingdiagramm und verschiedenen Anzeigebereichen.

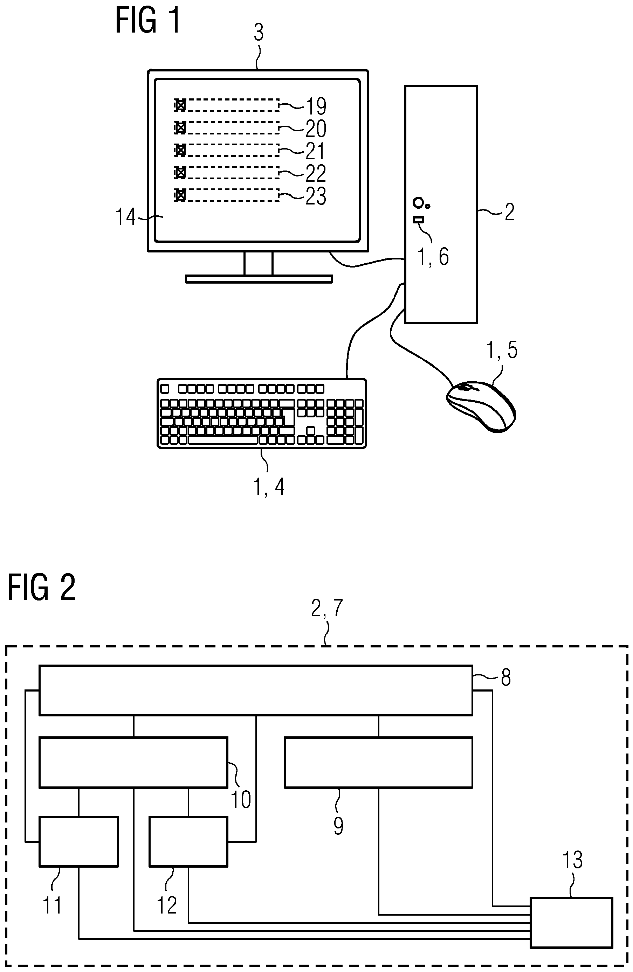

Fig. 1 zeigt eine beispielhafte Ausführungsvariante einer Vorrichtung zur Bremsenauslegung für eine Bremsanordnung eines Schienenfahrzeugs mit einer Eingabeeinrichtung 1, einer Recheneinrichtung 2 und einer Ausgabeeinrichtung 3.

Die Eingabeeinrichtung 1 weist eine Tastatur 4, eine Computermaus 5 sowie einen Anschluss 6 für einen externen Speicher (Universal Serial Bus - Speicherstick) auf, welche mit der Recheneinrichtung 2 verbunden sind.

Weiterhin mit der Recheneinrichtung 2 verbunden ist die Ausgabeeinrichtung 3, welche als Bildschirm ausgebildet ist. Die Recheneinrichtung 2 ist als Arbeitsplatzcomputer ausgeführt und mit einer nicht dargestellten Stromversorgung verbunden. Erfindungsgemäß ist es jedoch auch vorstellbar, dass die Recheneinrichtung 2 als Bordrechner des Schienenfahrzeugs, als mobiler Industriecomputer etc. ausgebildet ist.

Insbesondere bei einer Ausführung der Recheneinrichtung 2 als Bordrechner ist es denkbar, dass die Ausgabeeinrichtung 3 beispielsweise als Führerstandanzeige ausgebildet ist. Weiterhin kann die Ausgabeeinrichtung 3 beispielsweise auch einen Lautsprecher, einen Drucker etc. umfassen.

Die Recheneinrichtung 2 weist ein Speichermodul 7 auf, auf welchem ein Computerprogrammprodukt gespeichert ist.

Das Computerprogrammprodukt weist, wie in Fig. 2 gezeigt, eine Mehrzahl an funktional miteinander verbindbar und funktional voneinander trennbar ausgebildeten Computerprogrammprodukt-Modulen auf. Es sind ein als Konfigurationsmodul ausgeführtes erstes Computerprogrammprodukt-Modul 8, ein als Bremswegermittlungsmodul ausgeführtes zweites Computerprogrammprodukt-Modul 9, ein als Bremsentemperaturermittlungsmodul ausgeführtes drittes Computerprogrammprodukt-Modul 10, ein als Bremsenverschleißermittlungsmodul ausgeführtes viertes Computerprogrammprodukt-Modul 11, ein als Bremsenreibwertermittlungsmodul ausgeführtes fünftes Computerprogrammprodukt-Modul 12 sowie ein als Optimierungsmodul ausgeführtes sechstes Computerprogrammprodukt-Modul 13 vorgesehen.

Das Speichermodul 7 weist eine Speicherkapazität für mehr als sechs Computerprogrammprodukt-Module auf, ist also um zusätzliche Computerprogrammprodukt-Module erweiterbar.

Die Recheneinrichtung 2 weist eine grafische Benutzeroberfläche 14 auf, mit welcher das Computerprogrammprodukt verbunden ist, über welche ein Benutzer Einstellungen des Computerprogrammprodukts vornehmen kann und über welche er Ausgaben des Computerprogrammprodukts empfängt.

Die Einstellungen werden dabei über die Eingabeeinrichtung 1 vorgenommen, die Ausgaben über die Ausgabeeinrichtung 3 empfangen. Die Eingabeeinrichtung 1 und die Ausgabeeinrichtung 3 sind über die Recheneinrichtung 2 mit der grafischen Benutzeroberfläche 14 verbunden.

Über den Anschluss 6 können Dateien, welche Konfigurationsparameter für die Bremsenauslegung umfassen, in die Recheneinrichtung 2 und in das erste Computerprogrammprodukt-Modul 8 geladen werden.

In Fig. 1 ist eine beispielhafte Ansicht der grafischen Benutzeroberfläche 14 dargestellt, welche mit dem ersten Computerprogrammprodukt-Modul 8 verbunden ist.

Über diese Ansicht kann ein Benutzer Ermittlungsschritte für die Bremsenauslegung aktivieren und deaktivieren.

In der in Fig. 1 gezeigten Darstellung sind alle Ermittlungsschritte aktiviert. Eine Bremswegermittlung 15 mittels des zweiten Computerprogrammprodukt-Moduls 9 ist über ein erstes Auswahlfeld 19 aktiviert, eine Bremsentemperaturermittlung 16 mittels des dritten Computerprogrammprodukt-Moduls 10 über ein zweites Auswahlfeld 20, eine Bremsenverschleißermittlung 17 mittels des vierten Computerprogrammprodukt-Moduls 11 über ein drittes Auswahlfeld 21 und eine Bremsenreibwertermittlung 18 mittels des fünften Computerprogrammprodukt-Moduls 12 über ein viertes Auswahlfeld 22.

Über Klicken mit der Computermaus 5 in einem Auswahlfeld können bei Bedarf einzelne Ermittlungsschritte deaktiviert werden. Klickt beispielsweise ein Benutzer das dritte Auswahlfeld 21 in einem aktivierten Zustand an, so wird dieses deaktiviert und die erfindungsgemäße Vorrichtung führt keine Bremsenverschleißermittlung 17 durch.

Ein Klicken auf ein deaktiviertes Auswahlfeld bewirkt eine Aktivierung des jeweiligen Ermittlungsschritts.

Ein fünftes Auswahlfeld 23 ist dem sechsten Computerprogrammprodukt-Modul 13 zugeordnet. Auch dieses fünfte Auswahlfeld 23 ist in jener in Fig. 1 gezeigten Darstellung aktiviert, wodurch eine Optimierung der Bremsenauslegung erfolgt. Dabei werden nach einem Ermittlungsdurchlauf und bei Feststellung unzulässiger Werte einzelner Auslegungsgrößen (z.B. unzulässig hohe Bremsentemperaturen) Konfigurationsparameter der Bremsanordnung (z.B. eine Anzahl von Bremseinheiten oder Aufenthaltsdauern in Bahnhöfen oder Haltestellen in Fahrzyklen etc.) angepasst und ein neuerlicher Ermittlungsdurchlauf gestartet.

Es erfolgt eine Iteration aus Ermittlungs- und Anpassungsschritten, bis sämtliche Auslegungsgrößen der Bremsanordnung zulässige Werte aufweisen und bestätigt werden.

Wird das fünfte Auswahlfeld 23 mittels Klickens mit der Computermaus 5 deaktiviert, so erfolgt keine Optimierung der Bremsenauslegung. Das sechste Computerprogrammprodukt-Modul 13 wird von dem ersten Computerprogrammprodukt-Modul 8, dem zweiten Computerprogrammprodukt-Modul 9, dem dritten Computerprogrammprodukt-Modul 10, dem vierten Computerprogrammprodukt-Modul 11 und dem fünften Computerprogrammprodukt-Modul 12 getrennt.

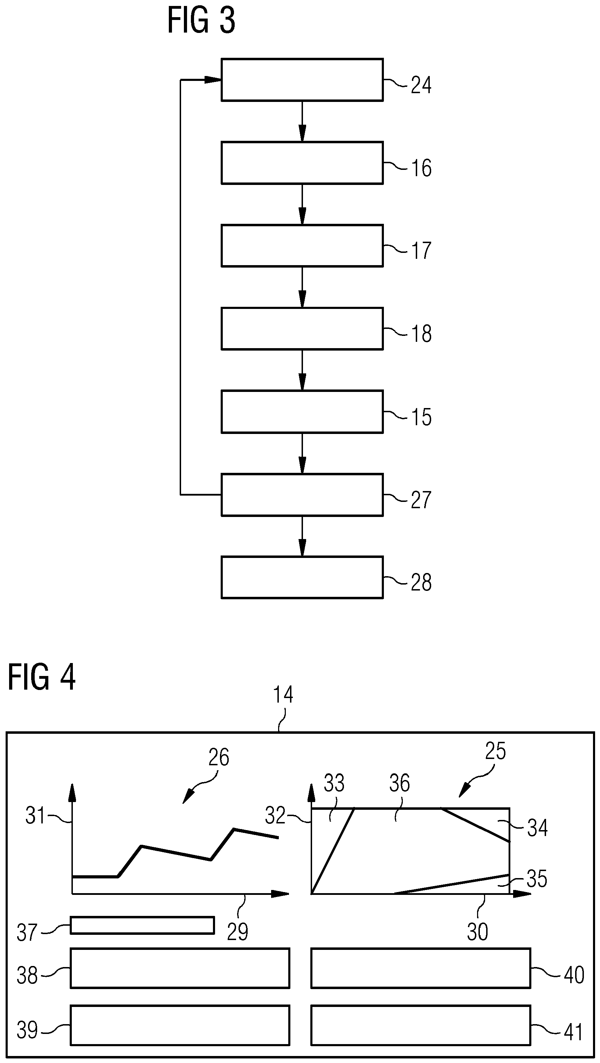

Die einzelnen Computerprogrammprodukt-Module sind also über die Eingabeeinrichtung 1 miteinander verbindbar und trennbar. Ermittlungsergebnisse, d.h. technische Bremszustände wie Bremswege, Bremsentemperaturen, Bremsenverschleiß und Bremsenreibungskoeffizienten etc. sowie gegebenenfalls angepasste Konfigurationsparameter werden über die grafische Benutzeroberfläche 14 bzw. die Ausgabeeinrichtung 3 angezeigt (Fig. 4 zeigt eine beispielhafte Ergebnisanzeige).

In Fig. 2 ist eine schematische Darstellung eines beispielhaften Computerprogrammprodukts offenbart, wobei eine Mehrzahl an Computerprogrammprodukt-Modulen auf einem Speichermodul 7 einer auch in Fig. 1 gezeigten Recheneinrichtung 2 einer beispielhaften Ausführungsvariante einer erfindungsgemäßen Vorrichtung zur Bremsenauslegung bezüglich einer Bremsanordnung eines Schienenfahrzeugs gespeichert ist.

Auf dem Speichermodul 7 sind ein als Konfigurationsmodul ausgeführtes erstes Computerprogrammprodukt-Modul 8, ein als Bremswegermittlungsmodul ausgeführtes zweites Computerprogrammprodukt-Modul 9, ein als Bremsentemperaturermittlungsmodul ausgeführtes drittes Computerprogrammprodukt-Modul 10, ein als Bremsenverschleißermittlungsmodul ausgeführtes viertes Computerprogrammprodukt-Modul 11, ein als Bremsenreibwertermittlungsmodul ausgeführtes fünftes Computerprogrammprodukt-Modul 12 sowie ein als Optimierungsmodul ausgeführtes sechstes Computerprogrammprodukt-Modul 13 gespeichert, mittels welchen die Bremsenauslegung durchgeführt wird.

Erfindungsgemäß ist es jedoch auch vorstellbar, einzelne Computerprogrammprodukt-Module auf unterschiedlichen Rechnern zu speichern und einen Datenaustausch zwischen den einzelnen Computerprogrammprodukt-Modulen über Datenleitungen oder Funk zu ermöglichen, beispielsweise das erste Computerprogrammprodukt-Modul 8 sowie das sechste Computerprogrammprodukt-Modul 13 auf einem Arbeitsplatzrechner und das zweite Computerprogrammprodukt-Modul 9, das dritte Computerprogrammprodukt-Modul 10, das vierte Computerprogrammprodukt-Modul 11 sowie das fünfte Computerprogrammprodukt-Modul 12 auf einem Bordrechner des Schienenfahrzeugs.

Das zweite Computerprogrammprodukt-Modul 9 und das dritte Computerprogrammprodukt-Modul 10 sind mit dem ersten Computerprogrammprodukt-Modul 8 trennbar verbunden, wobei eine Datenübertragung erfolgt.

Wird beispielsweise eine Bremsentemperaturermittlung 16 über die Eingabeeinrichtung 1 deaktiviert, so wird das dritte Computerprogrammprodukt-Modul 10 von dem ersten Computerprogrammprodukt-Modul 8 funktional getrennt, wodurch die Datenübertragung zwischen dem dritten Computerprogrammprodukt-Modul 10 und dem ersten Computerprogrammprodukt-Modul 8 beendet wird.

Das vierte Computerprogrammprodukt-Modul 11 und das fünfte Computerprogrammprodukt-Modul 12 sind mit dem ersten Computerprogrammprodukt-Modul 8, aber auch mit dem dritten Computerprogrammprodukt-Modul 10 gekoppelt, da eine Bremsenverschleißermittlung 17 und eine Bremsenreibwertermittlung 18 mittels des beispielhaften Computerprogrammprodukts neben Konfigurationsparametern bezüglich der Bremsanordnung (z.B. Parameter, welche ein Materialverhalten von Reibpartnern, beispielsweise von Bremsscheiben und Bremsbelägen oder von Rädern und Bremsklötzen, charakterisieren, und Bremseinstellungen) und des Schienenfahrzeugs (z.B. Fahrgeschwindigkeiten v) auch Ergebnisdaten aus der Bremsentemperaturermittlung 16 erfordern.

Das sechste Computerprogrammprodukt-Modul 13 ist mit dem ersten Computerprogrammprodukt-Modul 8, dem zweiten Computerprogrammprodukt-Modul 9, dem dritten Computerprogrammprodukt-Modul 10, dem vierten Computerprogrammprodukt-Modul 11 und dem fünften Computerprogrammprodukt-Modul 12 verbunden, wobei eine Datenübertragung erfolgt, um eine Rückkoppelung zwischen Ergebnissen einer Bremswegermittlung 15, der Bremsentemperaturermittlung 16, der Bremsenverschleißermittlung 17 sowie der Bremsenreibwertermittlung 18 einerseits und den Konfigurationsparametern andererseits zu bewirken, wodurch die Konfigurationsparameter auf Grundlage entsprechender Ermittlungsergebnisse automatisch angepasst und optimiert werden können.

Das erste Computerprogrammprodukt-Modul 8, das zweite Computerprogrammprodukt-Modul 9, das dritte Computerprogrammprodukt-Modul 10, das vierte Computerprogrammprodukt-Modul 11, das fünfte Computerprogrammprodukt-Modul 12 und das sechste Computerprogrammprodukt-Modul 13 sind jeweils einzeln lauffähig. Dadurch können, wie auch im Zusammenhang mit Fig. 1 beschrieben, einzelne Computerprogrammprodukt-Module bzw. Ermittlungsschritte deaktiviert werden.

Beispielsweise kann das fünfte Computerprogrammprodukt-Modul 12 von dem ersten Computerprogrammprodukt-Modul 8, dem dritten Computerprogrammprodukt-Modul 10 und dem sechsten Computerprogrammprodukt-Modul 13 getrennt werden, wodurch die Bremsenauslegung ohne die Bremsenreibwertermittlung 18 durchgeführt wird.

In Fig. 3 ist ein Flussdiagramm zu einer beispielhaften Ausführungsvariante eines erfindungsgemäßen, computerimplementierten Verfahrens zur Bremsenauslegung bezüglich einer Bremsanordnung eines Schienenfahrzeugs dargestellt, welches unter Einsatz einer im Zusammenhang mit Fig. 1 und Fig. 2 beschriebenen Vorrichtung zur Bremsenauslegung durchgeführt wird.

Zur Vorgabe von Konfigurationsparametern über eine in Fig. 1 gezeigte Eingabeeinrichtung 1 und zur Ermittlung von mechanischen und thermischen Bremszuständen wie Bremswegen, Bremsentemperaturen, Bremsenverschleiß und Bremsenreibungskoeffizienten (Bremswegermittlung 15, Bremsentemperaturermittlung 16, Bremsenverschleißermittlung 17 und Bremsenreibwertermittlung 18) mittels einer ebenfalls in Fig. 1 dargestellten Recheneinrichtung 2 sind ein Computerprogrammprodukt mit einem ersten Computerprogrammprodukt-Modul 8, einem zweiten Computerprogrammprodukt-Modul 9, einem dritten Computerprogrammprodukt-Modul 10, einem vierten Computerprogrammprodukt-Modul 11 sowie einem fünften Computerprogrammprodukt-Modul 12, welche im Zusammenhang mit Fig. 2 beschrieben sind, vorgesehen.

Das Computerprogrammprodukt umfasst weiterhin ein ebenfalls im Zusammenhang mit Fig. 2 beschriebenes sechstes Computerprogrammprodukt-Modul 13, um eine Rückkoppelung zwischen Ergebnissen der Bremswegermittlung 15, der Bremsentemperaturermittlung 16, der Bremsenverschleißermittlung 17 sowie der Bremsenreibwertermittlung 18 einerseits und den Konfigurationsparametern andererseits zu bewirken, wodurch die Konfigurationsparameter auf Grundlage entsprechender Ermittlungsergebnisse automatisch angepasst und optimiert werden können.

Die Bremsanordnung, für welche für diese beispielhafte Ausführungsvariante eines erfindungsgemäßen computerimplementierten Verfahrens Bremszustände ermittelt werden, weist eine Mehrzahl an Bremsvorrichtungen auf. Es sind sowohl pneumatische Reibungsbremsen (Wellen- und Radscheibenbremsen, bei welchen über einen Bremszylinder und einen Bremskolben Bremsbeläge gegen Wellen- und Radscheibenbremsen gedrückt werden, um so über entsprechende Reibkräfte Bremsmomente und folglich Verzögerungsvorgänge des Schienenfahrzeugs auszulösen), als auch elektrodynamische Bremsen vorgesehen, bei welchen Elektromotoren des Schienenfahrzeugs in einen Generatorbetrieb geschaltet werden, um so das Schienenfahrzeug zu verzögern.

Erfindungsgemäß ist es auch vorstellbar, dass weitere Bremsvorrichtungen vorgesehen sind, z.B. Magnetschienenbremsen, Wirbelstrombremsen etc. Weiterhin ist es denkbar, anstatt pneumatischer Reibungsbremsen hydraulische Reibungsbremsen einzusetzen.

Die Konfigurationsparameter betreffen die Bremsanordnung und das Schienenfahrzeug sowie deren Umgebung und werden über die Eingabeeinrichtung 1 in das Computerprogrammprodukt zur Verarbeitung eingelesen. Die Konfigurationsparameter umfassen variierbare Fahrzeugparameter (statische Massen und rotatorische Massen von Radsätzen des Schienenfahrzeugs), variierbare Bremsparameter (vorgegebene Fahrzeugverzögerungen a und Fahrzeugverzögerungsverläufe über einer Fahrgeschwindigkeit v, Art und Anzahl der Bremsvorrichtungen, Bremseinstellungen), variierbare Fahrparameter zur Berücksichtigung eines Abkühlverhaltens der Reibungsbremsen, welche als Fahrzeugbeschleunigungsparameter des Schienenfahrzeugs ausgeführt sind, erfindungsgemäß jedoch auch als Motorleistungsparameter ausgebildet sein können, sowie Umgebungstemperaturparameter als variierbare Umweltparameter.

Um Fahrzyklen in Bezug auf ein mechanisches und thermisches Verhalten der Bremsanordnung bewerten und gegebenenfalls anpassen zu können, umfassen die Konfigurationsparameter auch variierbare Streckenparameter. Diese Streckenparameter umfassen Abstände zwischen Halten des Schienenfahrzeugs, erreichbare Maximalgeschwindigkeiten des Schienenfahrzeugs zwischen den Halten als Bremsausgangsgeschwindigkeiten $v_0$ und Streckenneigungen für Streckenabschnitte mit Steigungen oder Gefällen.

Darüber hinaus werden auch Aufenthaltsdauern in Bahnhöfen oder Haltestellen verarbeitet, wobei diese Aufenthaltsdauern ebenfalls von den Streckenparametern umfasst sind.

Um lastabhängige Bremsungen bewerten zu können, umfassen die Streckenparameter weiterhin auch Informationen über Zuladungen des Schienenfahrzeugs, aus welchen Zuladungsänderungen gebildet werden. Die Informationen über die Zuladungen werden aus statistischen Aufzeichnungen oder konkreter Erfassung (automatische Fahrgastzählung) von in Bahnhöfen zu- oder aussteigenden Fahrgästen erzeugt. Einem Fahrgast ist ein Massenwert zugeordnet. Steigen Fahrgäste in das Schienenfahrzeug zu, so erhöht sich die Zuladung. Verlassen Fahrgäste das Schienenfahrzeug, so nimmt die Zuladung ab.

Erfindungsgemäß ist es auch denkbar, dass Bremsausgangsgeschwindigkeiten $v_0$ z.B. auch über die Bremsparameter vorgegeben werden, insbesondere dann, wenn Sequenzen aus einzelnen Bremsungen (z.B. eine Serie aus zwei oder drei Schnellbremsungen) in die Bremsauslegung miteinbezogen werden sollen.

Wie oben bemerkt, sind die Fahrzeugparameter, die Bremsparameter, die Fahrparameter, die Umweltparameter und die Streckenparameter variabel, d.h. können über die Eingabeeinrichtung 1 und eine grafische Benutzeroberfläche 14, von welcher in Fig. 1 eine Ansicht gezeigt ist, eingegeben werden oder, ebenfalls über die Eingabeeinrichtung 1, als Datenpakete oder Datensätze über Datenträger in das erste Computerprogrammprodukt-Modul 8 geladen werden (Konfigurationsparametereinstellung 24).

Die Streckenparameter sind für diese beispielhafte Ausführungsvariante in tabellarischer Form vorgesehen. Es sind darin in Abhängigkeit einer Fahrtstrecke in Metern Fahrgeschwindigkeiten v bzw. Bremsausgangsgeschwindigkeiten $v_0$ in Metern pro Sekunde und Streckenneigungen in Promille je Fahrtstreckenabschnitt sowie Aufenthaltsdauern von Halten in Sekunden angegeben. Weiterhin sind für jeden Halt Werte für die Zuladung in Kilogramm angegeben, um Masseveränderungen des Schienenfahrzeugs aufgrund von zu- und aussteigenden Fahrgästen berücksichtigen zu können.

Auf Basis der Konfigurationsparameter wird die Bremswegermittlung 15 mittels des zweiten Computerprogrammprodukt-Moduls 9 durchgeführt, wofür eine aus der Europäischen Norm (EN) 14531-1 bekannte Vorgehensweise angewendet wird. Dabei werden Bremskräfte der einzelnen Bremsvorrichtungen summiert, aus Gesamtbremskräften Realverzögerungen gebildet und aus den Realverzögerungen sowie den Bremsausgangsgeschwindigkeiten $v_0$ mittels Integration Bremswege bestimmt. Dabei werden Bremsmassen m, ein Bremsblending sowie Kraftschlussgrenzwerte kraftschlussabhängiger Bremsvorrichtungen berücksichtigt.

Die Bremskräfte werden teilweise aus den Konfigurationsparametern, teilweise aus Ergebnissen der Bremsenreibwertermittlung 18 gebildet, wodurch die Bremsentemperaturermittlung 16 und die Bremsenreibwertermittlung 18 zeitlich vor der Bremswegermittlung 15 durchgeführt werden müssen. Erfindungsgemäß ist es jedoch auch vorstellbar, die Bremskräfte mit einem Nominal-Reibungskoeffizienten zu bilden, insbesondere dann, wenn keine Bremsenreibwertermittlung 18 mittels des erfindungsgemäßen Verfahrens durchgeführt wird. Die Bremswegermittlung 15 kann dann auch zeitlich vor der Bremsentemperaturermittlung 16 durchgeführt werden.

Bei dem Bremsblending wird eine Gesamtbremskraft des Schienenfahrzeugs auf die in dem Schienenfahrzeug vorhandenen Bremsvorrichtungen aufgeteilt (siehe auch Blendingdiagramm 25 in Fig. 4). Übernehmen beispielsweise die Reibungsbremsen des Schienenfahrzeugs und die elektrodynamischen Bremsen des Schienenfahrzeugs bei einer definierten Fahrgeschwindigkeit v je 50% der angeforderten Bremskraft, so wird die auf die Reibungsbremsen bezogene Bremsmasse m entsprechend halbiert.

Bremst das Schienenfahrzeug in einem Streckenabschnitt, welcher eine Steigung oder ein Gefälle aufweist, so wird die entsprechende Streckenneigung aus den Streckenparametern in eine Ermittlung einer Hangabtriebskraft eingesetzt, welche die erforderliche Gesamtbremskraft vergrößert (bei einem Gefälle) oder verkleinert (bei einer Steigung).

Weiterhin wird die erforderliche Gesamtbremskraft durch einen nach der EN 14531-1 ermittelten Laufwiderstand reduziert.

Auf Grundlage der Konfigurationsparameter werden mittels des dritten Computerprogrammprodukt-Moduls 10 weiterhin Temperaturen T der Reibungsbremsen während Bremsvorgängen des Schienenfahrzeugs ermittelt (Bremsentemperaturermittlung 16). Diese Temperaturen T werden mittels einer aus dem Stand der Technik bekannten ersten Bildungsvorschrift bestimmt, welche aus einer bekannten eindimensionalen Wärmeleitungsgleichung gebildet wird:

$$T = T_0 + \frac{2P\sqrt{t}}{A\sqrt{\lambda\rho c}}(i^1 erfc \frac{x}{2\sqrt{a_T t}} - 4\frac{t}{t_B} - i^3 erfc \frac{x}{2\sqrt{a_T t}})$$

In dieser ersten Bildungsvorschrift sind eine Bremsausgangstemperatur $T_0$ einer Bremsscheibe, eine Bremsleistung P mit $P = m \cdot a \cdot v_0$, welche aus der Bremsmasse m, der über die Konfigurationsparameter vorgegebenen Fahrzeugverzögerung a sowie der Bremsausgangsgeschwindigkeit $v_0$ gebildet wird, eine Zeit t, ein Flächeninhalt A einer Reibfläche der Bremsscheibe, eine Wärmeleitzahl $\lambda$, eine Dichte $\rho$, eine spezifische Wärme c, eine Temperatur-

$$a_T = \frac{\lambda}{\rho c}$$

leitfähigkeit , eine Distanz x gemessen von einer Reibkörper-Oberfläche sowie eine Bremsdauer $t_B$ mit

$$t_B = \frac{v_0}{a}$$

enthalten.

Die Wärmeleitzahl $\lambda$, die Dichte $\rho$ sowie die spezifische Wärme c sind den Konfigurationsparametern zugeordnet und können für jede Reibungsbremsvorrichtung spezifisch eingestellt werden. Die Temperaturleitfähigkeit $a_T$ wird jeweils aus der Wärmeleitzahl $\lambda$, der Dichte $\rho$ sowie der spezifischen Wärme c ermittelt.

Die Bremsmasse m ist der Reibungsbremse, für welche die Temperatur T bestimmt wird, zugeordnet. Sie wird aus der statischen Masse und der rotatorischen Masse (d.h. aus den Fahrzeugparametern) jenes Radsatzes, auf welchen die Reibungsbremse wirkt, sowie aus jenem Teil einer Wagenkastenmasse des Schienenfahrzeugs, welcher dem genannten Radsatz zugeordnet ist, gebildet. Der genannte Teil der Wagenkastenmasse umfasst auch die aus den Streckenparametern stammende, aktuelle Zuladung jenes Wagenkastens, auf welchen die Wagenkastenmasse bezogen ist. In dieser beispielhaften Ausführungsvariante eines erfindungsgemäßen Verfahrens weist der genannte Wagenkasten vier Radsätze mit je zwei Bremsen auf. Die Bremsmasse m der oben genannten Reibungsbremse umfasst daher eine Hälfte der statischen Masse des Radsatzes, eine Hälfte der rotatorischen Masse des Radsatzes und ein Achtel der Wagenkastenmasse.

Die Bremsausgangstemperatur $T_0$ variiert von Bremsung zu Bremsung. Beispielsweise entspricht sie vor der ersten Bremsung zu Beginn eines Durchlaufs der Bremsentemperaturermittlung 16 der Umgebungstemperatur von 20°C aus den Umweltparametern. Die Umgebungstemperatur ist variabel, sie kann dementsprechend über die grafische Benutzeroberfläche 14 eingestellt werden. Bei einer Sequenz an Bremsungen (siehe beispielsweise Temperaturdiagramm 26 in Fig. 4) wird eine Veränderung der Bremsausgangstemperatur $T_0$ in Abhängigkeit einer Erwärmung der Reibungsbremse durch eine vorangegangene Bremsung und in Abhängigkeit einer Abkühlung aufgrund einer Wärmeabgabe der Reibungsbremse an die Umgebung der Bremsanordnung berücksichtigt. Bei der Abkühlung wird die Temperatur T gemäß einer quadratischen Funktion in Abhängigkeit der Fahrgeschwindigkeit v und der Zeit t verringert. Entsprechende Parameter dieser Funktion sind dem Verfahren als Konfigurationsparameter vorgegeben. Sie werden über Temperaturmessungen in Feldversuchen vorab bestimmt und über die grafische Benutzeroberfläche 14 in das erste Computerprogrammprodukt-Modul 8 eingelesen. Bei der Bestimmung der Abkühlung werden auch Fahrzeugbeschleunigungen (aus den Fahrparametern) nach Bremsungen und, aus den Streckenparametern, örtlich und zeitliche Abstände zwischen einzelnen Halten sowie Aufenthaltsdauern in Bahnhöfen oder Haltestellen berücksichtigt.

Diese erste Bildungsvorschrift wird auf die erste Bremsvorrichtung, welche als Radscheibenbremse ausgeführt ist, bzw. auf die Radbremsscheibe der ersten Radscheibenbremse angewendet, wobei als Wärmeleitzahl $\lambda$, Dichte $\rho$ etc. die Wärmeleitzahl, Dichte etc. der ersten Radbremsscheibe eingesetzt werden. Dabei wird für eine Bremsung der ersten Radscheibenbremse eine erste Temperatur $T_{11}$ gebildet.

Weiterhin wird die erste Bildungsvorschrift nach selbem Schema für weitere Bremsvorrichtungen und deren spezifische Parameter angewendet, beispielsweise für weitere Radbremsscheiben und Wellenbremsscheiben, und es werden daraus eine zweite Temperatur $T_{21}$ bis zu einer n1-Temperatur $T_{n1}$ bestimmt.

Alle Bremsscheiben, für welche eine erste Temperatur $T_{11}$ bis zu einer n1-Temperatur $T_{n1}$ bestimmt werden, werden geometrisch diskretisiert und dabei in eine definierte Anzahl an Scheibensegmenten unterteilt. Jedes Scheibensegment weist eine definierte Distanz x gemessen von einer Bremsscheiben-Reibfläche auf. Für jedes Scheibensegment wird nach oben genannter erster Bildungsvorschrift eine Temperatur T bestimmt. Für das erste Scheibensegment wird in der ersten Bildungsvorschrift die Distanz x = 0 gesetzt, es bezieht sich auf eine Reibfläche der Bremsscheibe. So wird eine Reibflächentemperatur $T_R$ ermittelt. Zumindest ein weiteres Scheibensegment bezieht sich auf eine Kühlfläche bzw. einen Bereich mit Kühlrippen der Bremsscheibe. Für dieses Segment wird die Distanz x gleich dem Abstand der Kühlfläche von der Reibfläche gesetzt und die Kühlflächentemperatur $T_K$ bestimmt.

Es ist grundsätzlich aus dem Stand der Technik bekannt, die Integrale der Komplemente der Fehlerintegrale

$$i^1 erfc \frac{x}{2\sqrt{a_T t}} \quad \text{und} \quad i^3 erfc \frac{x}{2\sqrt{a_T t}}$$ in der oben genannten ersten Bildungsvorschrift zu lösen. Entsprechende Lösungen können beispielsweise aus Tabellenwerken entnommen werden. In dieser beispielhaften Ausführungsvariante eines erfindungsgemäßen Verfahrens sind die genannten Integrale bzw. entsprechende Lösungen als Funktionen in dem dritten Computerprogrammprodukt-Modul 10 implementiert.

Die Temperatur T wird in ihrem zeitlichen Verlauf bestimmt und in dem in Fig. 4 gezeigten Temperaturdiagramm 26 ausgegeben. Weiterhin wird eine Maximaltemperatur $T_{max}$ für eine Distanz x = 0 zur Zeit $t = \frac{t_B}{2}$ nach einer folgenden, ebenfalls aus dem Stand der Technik bekannten, zweiten Bildungsvorschrift bestimmt und auf einer in Fig. 4 dargestellten Ergebnisanzeige ausgegeben:

$$T_{max} = T_0 + \frac{4}{3\sqrt{2\pi\lambda\rho c}} \frac{mv_0^{1,5} a^{0,5}}{A}$$

Darüber hinaus wird mittels dieser beispielhaften Ausführungsvariante eines erfindungsgemäßen Verfahrens auch ein Verschleiß W der Bremsanordnung aus Belastungsgrößen der Bremsanordnung (kinetische Energie, Reibflächentemperatur $T_R$) ermittelt, wobei die Bremsenverschleißermittlung 17 in dem vierten Computerprogrammprodukt-Modul 11 durchgeführt wird. Hierzu ist folgende dritte Bildungsvorschrift vorgesehen:

$$\dot{W} = C \cdot A_B \cdot \left(\frac{mv^2}{2}\right)^{\beta} \cdot T_R^{\gamma}$$

Auf Grundlage einer Verschleißkonstanten C, einer Bremsbelagfläche $A_B$, der Bremsmasse m, der Fahrgeschwindigkeit v, der Reibflächentemperatur $T_R$ der Bremsscheibe sowie eines ersten Materialexponenten $\beta$ und eines zweiten Materialexponenten $\gamma$, welche zusammen mit der Verschleißkonstanten C aus Bremsenprüfstandversuchen oder Betriebsbeobachtungen von Schienenfahrzeugen mit regelmäßigen Bremsen-Verschleißmessungen bestimmt werden (siehe hierzu auch die WO 2016/119929 A1) und gemeinsam mit der Verschleißkonstanten C und der spezifizierten Bremsbelagfläche $A_B$ als Konfigurationsparameter in dem ersten Computerprogrammprodukt-Modul 8 für jede zu bewertende Reibungsbremse gespeichert sind, wird eine Verschleißrate $\dot{W}$ eines Bremsbelags ermittelt. Diese wird mittels eines aus dem Stand der Technik bekannten numerischen Integrationsverfahrens zeitlich über die Bremsdauer $t_B$ integriert, woraus ein Verschleiß W bestimmt wird.

Für jede Reibungsbremse bzw. für jeden Bremsbelag wird ein Verschleiß W ermittelt.

Der Verschleiß W kann auch auf der in Fig. 4 gezeigten Ergebnisanzeige ausgewiesen werden, jedoch ist dies nur dann zweckmäßig, wenn sehr viele Bremsungen, beispielsweise über eine spezifizierte Lebensdauer eines Bremsbelags, bewertet werden und einzelne Verschleißbeträge summiert werden.

Weiterhin werden auch Reibungskoeffizienten $\mu$ der Bremsanordnung des Schienenfahrzeugs ermittelt (Bremsenreibwertermittlung 18), wobei die Bremsenreibwertermittlung 18 in dem fünften Computerprogrammprodukt-Modul 12 durchgeführt wird.

Hierzu ist folgende vierte Bildungsvorschrift vorgesehen:

$\mu = p_{00}v^0T_R^0 + p_{01}v^0T_R^1 + p_{20}v^2T_R^0 + p_{11}v^1T_R^1 + p_{02}v^0T_R^2 + p_{30}v^3T_R^0 + p_{21}v^2T_R^1 + p_{12}v^1T_R^2 + p_{03}v^0T_R^3 + p_{40}v^4T_R^0 + p_{31}v^3T_R^1 + p_{22}v^2T_R^2 + p_{13}v^1T_R^3 + p_{04}v^0T_R^4 + p_{50}v^5T_R^0 + p_{41}v^4T_R^1 + p_{32}v^3T_R^2 + p_{23}v^2T_R^3 + p_{14}v^1T_R^4 + p_{05}v^0T_R^5$

Auf Grundlage von Reibwertkonstanten p, welche aus Bremsenprüfstandversuchen oder Bremsmessfahrten bestimmt werden und als Konfigurationsparameter für jede zu bewertende Reibungsbremse in dem ersten Computerprogrammprodukt-Modul 8 gespeichert sind, der Fahrgeschwindigkeit v, sowie der Reibflächentemperatur $T_R$ der Bremsscheibe werden die Reibungskoeffizienten $\mu$ zwischen der Bremsscheibe und dem Bremsbelag ermittelt.

Nach der Bremsentemperaturermittlung 16, der Bremsenverschleißermittlung 17, der Bremsenreibwertermittlung 18 und der Bremswegermittlung 15 wird eine Ergebnisinterpretation 27 durchgeführt, wobei ein Vergleich von Ermittlungsergebnissen mit Grenzwerten erfolgt. Unter anderem wird in dieser beispielhaften Ausführungsvariante eines erfindungsgemäßen Verfahrens die Reibflächentemperatur $T_R$ mit einem Temperaturgrenzwert $T_G$ verglichen. Bei Einhaltung aller Grenzwerte werden die Konfigurationsparameter bestätigt.

Bei Verletzung eines oder mehrerer Grenzwerte werden ein oder mehrere Konfigurationsparameter angepasst (Konfigurationsparametereinstellung 24) und mit den angepassten Konfigurationsparametern eine neuerliche Bremsentemperaturermittlung 16, eine neuerliche Bremsenverschleißermittlung 17, eine neuerliche Bremsenreibwertermittlung 18 sowie eine neuerliche Bremswegermittlung 15 gestartet.

Das sechste Computerprogrammprodukt-Modul 13 gewährleistet hierbei eine Verknüpfung zwischen dem ersten Computerprogrammprodukt-Modul 8 einerseits und dem zweiten Computerprogrammprodukt-Modul 9, dem dritten Computerprogrammprodukt-Modul 10, dem vierten Computerprogrammprodukt-Modul 11 sowie dem fünften Computerprogrammprodukt-Modul 12 andererseits.

Überschreitet beispielsweise die Reibflächentemperatur $T_R$ den Temperaturgrenzwert $T_G$, so wird die Anzahl an Reibungsbremsvorrichtungen in den Konfigurationsparametern um eins erhöht, wodurch die erforderliche Bremskraft je Reibungsbremsvorrichtung sinkt und somit eine Temperaturreduktion je Reibungsbremsvorrichtung zu erwarten ist.

Eine Anpassung der Konfigurationsparameter und eine Durchführung eines neuerlichen Ermittlungsdurchgangs werden so oft wiederholt, bis sämtliche Grenzwerte eingehalten werden und sämtliche Ermittlungsergebnisse bestätigt werden. Die bestätigten Ermittlungsergebnisse werden abschließend über eine auch im Zusammenhang mit Fig. 4 beschriebene Ergebnisausgabe 28 angezeigt.

Erfindungsgemäß ist weiterhin vorgesehen, dass bei Überschreitung von Grenzwerten durch die Ermittlungsergebnisse Fahrzyklen des Schienenfahrzeugs, d.h. Kombinationen aus Beschleunigungs- und Bremsmanövern, Phasen mit konstanter Fahrgeschwindigkeit v sowie Stillstandphasen, über die Konfigurationsparameter angepasst werden. Überschreitet beispielsweise die Reibflächentemperatur $T_R$ den Temperaturgrenzwert $T_G$, so kann die Maximalgeschwindigkeit des Schienenfahrzeugs auf einer bestimmten Strecke in den Streckenparametern reduziert werden. Weiterhin ist es denkbar, die Aufenthaltsdauern des Schienenfahrzeugs in Bahnhöfen oder Haltestellen in den Streckenparametern zu verlängern, um Abkühlzeiträume der Reibungsbremsvorrichtungen zu vergrößern.

Die angepassten und letztendlich bestätigten Streckenparameter können über die in Fig. 1 gezeigte Ausgabeeinrichtung 3 in tabellarischer Form angezeigt und in dem ersten Computerprogrammprodukt-Modul 8 gespeichert werden.

So können optimale Fahrzyklen entwickelt werden, welche einen möglichst geringen Bremsenverschleiß und zugleich eine möglichst hohe Energieeffizienz des Schienenfahrzeugs bewirken.

Werden die Reibungskoeffizienten $\mu$ über die Bremskräfte der Reibungsbremsvorrichtungen in die Bremswegermittlung 15 eingesetzt und zeigen sich dabei unzulässig lange Bremswege, so ist es möglich, in den Konfigurationsparametern die Art der Reibungsbremsvorrichtungen zu ändern und in einem neuerlichen Ermittlungsdurchgang beispielsweise Parameter von Bremsbelägen mit höherer Reibwertstabilität anzusetzen.

Eine entsprechende Änderung kann auch automatisch erfolgen, indem das sechste Computerprogrammprodukt-Modul 13 das erste Computerprogrammprodukt-Modul 8 anweist, Parameter von Bremsbelägen mit höherer Reibwertstabilität anzuwählen, indem ein Reibwertklassenindikator um eins erhöht wird, wodurch ein Zugriff auf einen dem neuen Reibwertklassenindikator zugeordneten Parametersatz erfolgt und der neuerliche Ermittlungsdurchgang mit diesem Parametersatz durchgeführt wird.

Welche Anpassungsstrategie (z.B. Anpassung von Fahrzeugparametern, Anpassung von Bremsparametern oder Anpassung von Streckenparametern etc.) umgesetzt wird, kann ein Benutzer mittels einer Eingabe über die Eingabeeinrichtung 1 und die grafische Benutzeroberfläche 14 festlegen.

In Fig. 4 ist eine Ergebnisanzeige zu jenem erfindungsgemäßen, computerimplementierten Verfahren, welches beispielhaft im Zusammenhang mit Fig. 3 beschrieben ist und auf einer Recheneinrichtung 2 gemäß Fig. 1 mittels Computerprogrammprodukt-Modulen gemäß Fig. 2 durchgeführt wird, dargestellt, über welche Ermittlungsergebnisse ausgegeben werden (Ergebnisausgabe 28, siehe Fig. 3). Die Ergebnisausgabe 28 erfolgt über eine auf einer in Fig. 1 dargestellten Ausgabeeinrichtung 3 angezeigte, im Zusammenhang mit Fig. 1 und Fig. 3 beschriebene grafische Benutzeroberfläche 14.

Es ist ein Temperaturdiagramm 26 gezeigt, welches einen Temperaturverlauf einer Bremsscheibe über einer Zeit t angibt.

Auf einer ersten Abszisse 29 des Temperaturdiagramms 26 ist eine Zeit t angegeben. Auf einer ersten Ordinate 31 des Temperaturdiagramms 26 ist eine, wie im Zusammenhang mit Fig. 3 beschrieben, als Reibflächentemperatur $T_R$ ermittelte Bremsentemperatur angezeigt. Erfindungsgemäß ist es jedoch auch vorstellbar, auf der ersten Abszisse 29 einen Weg anzugeben.

Das Temperaturdiagramm 26 zeigt, erkennbar an Temperatursteigerungen, eine erste Bremsung und eine zweite Bremsung eines Schienenfahrzeugs.

Vor der ersten Bremsung hat die Bremsscheibe eine Umgebungstemperatur als Bremsausgangstemperatur $T_0$. Nach der ersten Bremsung und der zweiten Bremsung kühlt die Bremsscheibe gemäß einer in das erfindungsgemäße Verfahren implementierten Abkühlfunktion, welche im Zusammenhang mit Fig. 3 beschrieben und in Fig. 4 vereinfachend linear dargestellt ist, ab.

Weiterhin weist die Ergebnisanzeige ein Blendingdiagramm 25 auf, in welchem auf einer zweiten Abszisse 30 eine Fahrgeschwindigkeit v und auf einer zweiten Ordinate 32 eine Bremskraft aufgetragen ist. Das Blendingdiagramm 25 zeigt ein Zusammenwirken von Bremsvorrichtungen, wie im Zusammenhang mit Fig. 3 beschrieben.

In einem ersten Bremskraft-Fahrgeschwindigkeitsbereich 33, in einem zweiten Bremskraft-Fahrgeschwindigkeitsbereich 34 und in einem dritten Bremskraft-Fahrgeschwindigkeitsbereich 35 wirken Reibungsbremsen als erste Bremsvorrichtungen, in einem vierten Bremskraft-Fahrgeschwindigkeitsbereich 36 eine elektrodynamische Bremse als zweite Bremsvorrichtung.

Darüber hinaus umfasst die Ergebnisanzeige einen ersten Anzeigebereich 37, in welchem eine wie im Zusammenhang mit Fig. 3 beschrieben ermittelte und kumulierte Maximaltemperatur $T_{max}$ nach der zweiten Bremsung ausgegeben ist. Die Maximaltemperatur $T_{max}$ ist auf eine Bremsscheiben-Reibfläche bezogen.

In einem zweiten Anzeigebereich 38 sind weitere Informationen über die im Zusammenhang mit Fig. 3 beschriebenen Bildungsvorgänge ausgegeben, beispielsweise eine Bremsmasse m und eine Bremsleistung P.

Ein dritter Anzeigebereich 39 zeigt verschiedene Konfigurationsparameter eines im Zusammenhang mit Fig. 2 beschriebenen ersten Computerprogrammprodukt-Moduls 8, wie Fahrzeugparameter (z.B. statische Massen und rotatorische Massen), Bremsparameter (z.B. eine Fahrzeugverzögerung a), Umweltparameter (die Umgebungstemperatur), Streckenparameter (z.B. Aufenthaltsdauern in Bahnhöfen) sowie Fahrparameter (z.B. eine Fahrzeugbeschleunigung). Einzelne Konfigurationsparameter werden während des Verfahrens angepasst.

In einem vierten Anzeigebereich 40 sind Blendinginformationen dargestellt. Es ist angegeben, welche Bremskraft auf die jeweilige Bremsvorrichtung entfällt.

Ein fünfter Anzeigebereich 41 gibt einen während des im Zusammenhang mit Fig. 3 beschriebenen Verfahrens als Bremsenverschleiß ermittelten Verschleiß W und einen ebenfalls während des im Zusammenhang mit Fig. 3 beschriebenen Verfahrens als Bremsenreibungskoeffizienten ermittelten Reibungskoeffizienten $\mu$ an.

Zusätzlich zu der Ergebnisanzeige wird über die Ergebnisausgabe 28 auch ein formatierter, elektronischer Ergebnisbericht in einem plattformunabhängigen Dateiformat erstellt, in welchem Bremszustände bzw. die Ermittlungsergebnisse und die Konfigurationsparameter ausgegeben, beschrieben und bewertet sind.

Dieser Ergebnisbericht wird über die Ausgabeeinrichtung 3 angezeigt und kann über einen mit der Recheneinrichtung 2 verbundenen Drucker ausgedruckt werden.

Liste der Bezeichnungen

| | |
|---|---|
| 1 | Eingabeeinrichtung |
| 2 | Recheneinrichtung |
| 3 | Ausgabeeinrichtung |
| 4 | Tastatur |
| 5 | Computermaus |
| 6 | Anschluss |
| 7 | Speichermodul |
| 8 | Erstes Computerprogrammprodukt-Modul |
| 9 | Zweites Computerprogrammprodukt-Modul |
| 10 | Drittes Computerprogrammprodukt-Modul |
| 11 | Viertes Computerprogrammprodukt-Modul |
| 12 | Fünftes Computerprogrammprodukt-Modul |
| 13 | Sechstes Computerprogrammprodukt-Modul |
| 14 | Benutzeroberfläche |
| 15 | Bremswegermittlung |
| 16 | Bremsentemperaturermittlung |
| 17 | Bremsenverschleißermittlung |
| 18 | Bremsenreibwertermittlung |
| 19 | Erstes Auswahlfeld |
| 20 | Zweites Auswahlfeld |
| 21 | Drittes Auswahlfeld |
| 22 | Viertes Auswahlfeld |
| 23 | Fünftes Auswahlfeld |
| 24 | Konfigurationsparametereinstellung |
| 25 | Blendingdiagramm |
| 26 | Temperaturdiagramm |
| 27 | Ergebnisinterpretation |
| 28 | Ergebnisausgabe |
| 29 | Erste Abszisse |
| 30 | Zweite Abszisse |

| | |
|---|---|
| 31 | Erste Ordinate |
| 32 | Zweite Ordinate |
| 33 | Erster Bremskraft-Fahrgeschwindigkeitsbereich |
| 34 | Zweiter Bremskraft-Fahrgeschwindigkeitsbereich |
| 35 | Dritter Bremskraft-Fahrgeschwindigkeitsbereich |
| 36 | Vierter Bremskraft-Fahrgeschwindigkeitsbereich |
| 37 | Erster Anzeigebereich |
| 38 | Zweiter Anzeigebereich |
| 39 | Dritter Anzeigebereich |
| 40 | Vierter Anzeigebereich |
| 41 | Fünfter Anzeigebereich |

| | |
|---|---|
| $v$ | Fahrgeschwindigkeit |
| $a$ | Fahrzeugverzögerung |
| $v_0$ | Bremsausgangsgeschwindigkeit |
| $m$ | Bremsmasse |
| $T$ | Temperatur |
| $T_0$ | Bremsausgangstemperatur |
| $P$ | Bremsleistung |
| $t$ | Zeit |
| $A$ | Flächeninhalt |
| $\lambda$ | Wärmeleitzahl |
| $\rho$ | Dichte |
| $c$ | spezifische Wärme |
| $a_T$ | Temperaturleitfähigkeit |
| $x$ | Distanz |
| $t_B$ | Bremsdauer |
| $T_{11}$ | Erste Temperatur |
| $T_{21}$ | Zweite Temperatur |
| $T_{n1}$ | n1-Temperatur |
| $T_R$ | Reibflächentemperatur |
| $T_K$ | Kühlflächentemperatur |
| $T_{max}$ | Maximaltemperatur |
| $W$ | Verschleiß |
| $C$ | Verschleißkonstante |
| $A_B$ | Bremsbelagfläche |
| $\beta$ | Erster Materialexponent |
| $\gamma$ | Zweiter Materialexponent |
| $\dot{W}$ | Verschleißrate |
| $\mu$ | Reibungskoeffizient |
| $p$ | Reibwertkonstante |
| $T_G$ | Temperaturgrenzwert |

## Patentansprüche

1. Vorrichtung zur Bremsenauslegung für ein Fahrzeug, insbesondere zur Auslegung von zumindest einer Bremsanordnung eines Schienenfahrzeugs, wobei eine Eingabeeinrichtung, eine Recheneinrichtung sowie eine Ausgabeeinrichtung vorgesehen sind, wobei in der Recheneinrichtung (2) ein Computerprogrammprodukt vorgesehen ist, wobei
das Computerprogrammprodukt eine Mehrzahl an zum Zweck eines variablen Ermittlungsumfangs im Hinblick auf Auslegungskriterien von Bremsanordnungen miteinander verbindbar und voneinander trennbar ausgebildeten Computerprogrammprodukt-Modulen zur Bremsenauslegung aufweist, **dadurch gekennzeichnet, dass** eines der Computerprogrammprodukt-Module als Bremsenverschleißermittlungsmodul ausgeführt ist.

2. Vorrichtung nach Anspruch 1, **dadurch gekennzeichnet, dass** die Recheneinrichtung (2) ein Speichermodul (7) aufweist, auf welchem zwei Computerprogrammprodukt-Module gespeichert sind und welches eine Speicherkapazität für mehr als zwei Computerprogrammprodukt-Module aufweist.

3. Vorrichtung nach Anspruch 1 oder 2, **dadurch gekennzeichnet, dass** eines der Computerprogrammprodukt-Module als Konfigurationsmodul ausgeführt ist.

4. Vorrichtung nach einem der Ansprüche 1 bis 3, **dadurch gekennzeichnet, dass** eines der Computerprogrammprodukt-Module als Bremswegermittlungsmodul ausgeführt ist.

5. Vorrichtung nach einem der Ansprüche 1 bis 4, **dadurch gekennzeichnet, dass** eines der Computerprogrammprodukt-Module als Bremsentemperaturermittlungsmodul ausgeführt ist.

6. Vorrichtung nach einem der Ansprüche 1 bis 5, **dadurch gekennzeichnet, dass** eines der Computerprogrammprodukt-Module als Bremsenreibwertermittlungsmodul ausgeführt ist.

7. Vorrichtung nach einem der Ansprüche 1 bis 6, **dadurch gekennzeichnet, dass** die Computerprogramprodukt-Module mit einem Optimierungsmodul verbindbar sind.

8. Vorrichtung nach einem der Ansprüche 1 bis 7, **dadurch gekennzeichnet, dass** die Computerprogrammprodukt-Module über die Eingabeeinrichtung (1) miteinander verbindbar und voneinander trennbar ausgebildet sind.

9. Vorrichtung nach einem der Ansprüche 1 bis 8, **dadurch gekennzeichnet, dass** die Recheneinrichtung (2) eine grafische Benutzeroberfläche (14) aufweist.

10. Vorrichtung nach Anspruch 9, **dadurch gekennzeichnet, dass** die Eingabeeinrichtung (1) über die Recheneinrichtung (2) mit der grafischen Benutzeroberfläche (14) verbunden ist.

11. Vorrichtung nach Anspruch 9 oder 10, **dadurch gekennzeichnet, dass** die Ausgabeeinrichtung (3) über die Recheneinrichtung (2) mit der grafischen Benutzeroberfläche (14) verbunden ist.

12. Verfahren zur Bremsenauslegung für ein Fahrzeug unter Einsatz einer Vorrichtung nach einem der Ansprüche 1 bis 11, **dadurch gekennzeichnet, dass** Konfigurationsparameter über die Eingabeeinrichtung (1) eingelesen werden, mittels der Recheneinrichtung (2) unter Einsatz der Konfigurationsparameter technische Bremszustände ermittelt werden, auf Grundlage entsprechender Ermittlungsergebnisse bezüglich der Bremszustände die Konfigurationsparameter bestätigt oder angepasst werden und die Bremszustände sowie die Konfigurationsparameter über die Ausgabeeinrichtung (3) ausgegeben werden.

13. Verfahren nach Anspruch 12, **dadurch gekennzeichnet, dass** Teile der Konfigurationsparameter zumindest einen Fahrzyklus des Fahrzeugs definieren, welcher auf Grundlage der Ermittlungsergebnisse bezüglich der Bremszustände bestätigt oder angepasst wird.

14. Verfahren nach Anspruch 12 oder 13, **dadurch gekennzeichnet, dass** als Bremszustände zumindest Bremsentemperaturen, Bremsenreibungskoeffizienten sowie Bremswege ermittelt werden, wobei die Bremsenreibungskoeffizienten in eine Bremswegermittlung (15) eingesetzt werden.

15. Verfahren nach einem der Ansprüche 12 bis 14, **dadurch gekennzeichnet, dass** die Bremszustände sowie die Konfigurationsparameter in einem Ergebnisbericht ausgegeben werden.

**Claims**

1. Device for brake design for a vehicle, in particular for design of at least one brake arrangement of a rail vehicle, wherein an input facility, a computing facility and an output facility are provided, wherein a computer program product is provided in the computing facility (2), wherein the computer program product has a plurality of computer program product modules for brake design which are embodied so that they can be connected with and separated from one another for the purpose of a variable scope of determination in terms of design criteria of brake arrangements, **characterised in that** one of the computer product modules is implemented as a module for determining wearing of the brakes.

2. Device according to claim 1, **characterised in that** the computing facility (2) has a storage module (7), on which two computer program product modules are stored and which has a storage capacity for more than two computer program product modules.

3. Device according to claim 1 or 2, **characterised in that** one of the computer program product modules is implemented as a configuration module.

4. Device according to one of claims 1 to 3, **characterised in that** one of the computer program product modules is implemented as a module for determining braking distance.

5. Device according to one of claims 1 to 4, **characterised in that** one of the computer program product modules is implemented as a module for determining brake temperature.

6. Device according to one of claims 1 to 5, **characterised in that** one of the computer program product modules is implemented as a module for determining friction coefficient of the brakes.

7. Device according to one of claims 1 to 6, **characterised in that** the computer program product modules can be connected to an optimisation module.

8. Device according to one of claims 1 to 7, **characterised in that** the computer program product modules are embodied so that they can be connected with and separated from one another by way of the input facility (1).

9. Device according to one of claims 1 to 8, **characterised in that** the computing facility (2) has a graphical user interface (14).

10. Device according to claim 9, **characterised in that** the input facility (1) is connected to the graphical user interface (14) by way of the computing facility (2).

11. Device according to claim 9 or 10, **characterised in that** the output facility (3) is connected to the graphical user interface (14) by way of the computing facility (2).

12. Method for brake design for a vehicle using a device according to one of claims 1 to 11, **characterised in that** configuration parameters are read in by the input facility (1), technical brake states are determined by means of the computer facility (2) using the configuration parameters, the configuration parameters are confirmed or adapted based on corresponding determination results relating to the brake states and the brake states and the configuration parameters are output by way of the output facility (3).

13. Method according to claim 12, **characterised in that** parts of the configuration parameters define at least a travel cycle of the vehicle, which is confirmed or adapted based on the determination results relating to the brake states.

14. Method according to claim 12 or 13, **characterised in that** at least brake temperatures, friction coefficients of the brakes and braking distance are determined as brake states, wherein the friction coefficient of the brakes is used in a braking distance determination (15).

15. Method according to one of claims 12 to 14, **characterised in that** the brake states and configuration parameters are output in a results report.

**Revendications**

1. Dispositif de conception de freins pour véhicule, notamment de conception d'au moins un agencement de freinage d'un véhicule sur rails, dans lequel on prévoit un dispositif d'entrée, un dispositif de calcul et un dispositif de sortie, un produit programme d'ordinateur étant prévu dans le dispositif de calcul (2), dans lequel le produit programme d'ordinateur comprend une pluralité de modules de produit programme d'ordinateur destinés à la conception des freins, qui sont configurés de manière à pouvoir être connectés les uns aux autres et déconnectés les uns des autres aux fins de permettre une étendue de détermination variable concernant les paramètres de conception d'agencements de freinage, **caractérisé en ce que** l'un des modules de produit programme d'ordinateur est exécuté en tant que module de détermination d'usure de frein.

2. Dispositif selon la revendication 1, **caractérisé en ce que** le dispositif de calcul (2) comprend un module mémoire (7) sur lequel deux modules de produit programme d'ordinateur sont stockés et qui présente une capacité de mémoire pour plus de deux modules de produit programme d'ordinateur.

3. Dispositif selon la revendication 1 ou 2, **caractérisé en ce que** l'un des modules de produit programme d'ordinateur est exécuté en tant que module de configuration.

4. Dispositif selon l'une des revendications 1 à 3, **caractérisé en ce que** l'un des modules de produit programme d'ordinateur est exécuté en tant que module de détermination de course de frein.

5. Dispositif selon l'une des revendications 1 à 4, **caractérisé en ce que** l'un des modules de produit programme d'ordinateur est exécuté en tant que module de détermination de température de frein.

6. Dispositif selon la revendication 1 à 5, **caractérisé en ce que** l'un des modules de produit programme d'ordinateur est exécuté en tant que module de détermination d'une valeur de frottement de frein.

7. Dispositif selon l'une des revendications 1 à 6, **caractérisé en ce que** les modules de produit programme d'ordinateur peuvent être connectés à un module d'optimisation.

8. Dispositif selon l'une des revendications 1 à 7, **caractérisé en ce que** les modules de produit programme d'ordinateur peuvent être connectés les uns aux autres et déconnectés les uns des autres par le biais du dispositif d'entrée (1).

9. Dispositif selon l'une des revendications 1 à 8, **caractérisé en ce que** le dispositif de calcul (2) est pourvu d'une interface utilisateur graphique (14).

10. Dispositif selon la revendication 9, **caractérisé en ce que** le dispositif d'entrée (1) est relié à l'interface utilisateur graphique (14) par le biais du dispositif de calcul (2).

11. Dispositif selon la revendication 9 ou 10, **caractérisé en ce que** le dispositif de sortie (3) est relié à l'interface utilisateur graphique (14) par le biais du dispositif de calcul (2).

12. Procédé de conception de freins pour véhicule mettant en œuvre un dispositif selon l'une des revendications 1 à 11, **caractérisé en ce que** des paramètres de configuration sont entrés par le biais du dispositif d'entrée (1), des états techniques de freins sont déterminés au moyen du dispositif de calcul (2) en utilisant les paramètres de configuration, les paramètres de configuration sont confirmés ou adaptés sur la base des résultats de détermination correspondants concernant les états de freins, et les états de freins ainsi que les paramètres de configuration sont délivrés en sortie par le biais du dispositif de sortie (3).

13. Procédé selon la revendication 12, **caractérisé en ce que** des parties des paramètres de configuration définissent au moins un cycle de conduite du véhicule, qui est confirmé ou adapté sur la base des résultats de détermination concernant les états de freins.

14. Procédé selon la revendication 12 ou 13, **caractérisé en ce que** l'on détermine, en tant qu'états de freins, au moins les températures des freins, les coefficients de frottement des freins et les courses de freinage, les coefficients de frottement des freins étant utilisés dans une détermination des courses de freinage (15).

15. Procédé selon l'une des revendications 12 à 14, **caractérisé en ce que** les états de freins ainsi que les paramètres de configuration sont délivrés dans un rapport de résultats.

FIG 1

FIG 2

## FIG 3

## FIG 4

**IN DER BESCHREIBUNG AUFGEFÜHRTE DOKUMENTE**

**In der Beschreibung aufgeführte Patentdokumente**

- EP 2753514 B1
- DE 102011113024 A1
- WO 2018054736 A1
- WO 2016119929 A1